# EUROPÄISCHE PATENTSCHRIFT

(11) **EP 3 455 552 B1**
(45) Veröffentlichungstag und Bekanntmachung des Hinweises auf die Patenterteilung: **15.04.2020**
(21) Anmeldenummer: 17733959.5
(22) Anmeldetag: 04.05.2017
(51) Int. Cl.: F21V 21/29, A42B 3/04, B62J 6/02, B62J 11/00

(54) **LAMPENHALTERUNG**
LAMP HOLDER
SUPPORT POUR LAMPE

(30) Priorität: 10.05.2016 DE 102016108564
(43) Veröffentlichungstag der Anmeldung: 20.03.2019
(73) Patentinhaber: Ledlenser GmbH & Co. KG, 42699 Solingen (DE)
(72) Erfinder: BUHL, Erich, 42697 Solingen (DE)
(74) Vertreter: Patentanwälte Vomberg & Schart
(86) Internationale Anmeldenummer: PCT/DE2017/100382
(87) Internationale Veröffentlichungsnummer: WO 2017/194052

(56) Entgegenhaltungen:
- CH-A- 549 260
- DE-U1-202015 102 373
- US-A- 1 186 428
- US-A- 4 898 490
- US-A1- 2005 047 124

## Beschreibung

Die vorliegende Erfindung bezieht sich auf eine Halterung, insbesondere eine Lampenhalterung, mit einem Kugelgelenk, das eine Gelenkpfanne und einen Gelenkkopf besitzt, die in Teilbereichen korrespondierende kugelförmige Gelenkflächen aufweisen, wobei die Gelenkpfanne im zusammengesetzten Zustand den Gelenkkopf über dessen Äquator hinaus umgreift.

Derartige Halterungen sind aus dem Stand der Technik bekannt und erlauben eine stufenlose Ausrichtung einer Lampe innerhalb eines vorgegebenen Raumwinkels, dessen Größe von der Öffnung der Gelenkpfanne und der Form des Gelenkkopfes bzw. der hieran angeordneten Lampe abhängt. Konstruktionsbedingt lassen sich herkömmliche Lampenhalterungen mit einem Kugelgelenk, dessen Gelenkpfanne den Gelenkkopf über dessen Äquator hinaus umgreift (sog. Nussgelenk), nicht ohne Weiteres auseinandernehmen, weil die Gelenkpfanne den Gelenkkopf vollständig formschlüssig umgreift. Aus diesen Gründen werden Kugelgelenke, insbesondere Nussgelenke, nicht für die lösbare Befestigungen von Lampen eingesetzt. Auf die besonderen Vorteile von Kugelgelenken hinsichtlich der freien und stufenlosen Ausrichtbarkeit der Lampe wird in diesen Fällen verzichtet.

Nussgelenke der gattungsgemäßen Art werden insbesondere in DE 20 2015 102 373 U1, US 2005/047124 A1, US 4,898,490 A, US 1,186,428 A und CH 549 260 A offenbart. Die beschriebenen Gelenkpfannen weisen schlitzförmige Ausnehmungen auf, die eine Verspreizung der Gelenkpfannen zum Einführen der jeweiligen Gelenkkugel erlauben.

Es ist daher die Aufgabe der vorliegenden Erfindung, eine Halterung für eine Lampe anzugeben, die die Vorteile eines Kugelgelenkes bei der Ausrichtung der Lampe mit den Vorteilen einer lösbaren Befestigung kombiniert.

Diese Aufgabe wird durch die Halterung nach Anspruch 1 gelöst. Erfindungsgemäß sind die Gelenkpfanne und der Gelenkkopf durch eine Steck-Dreh-Bewegung lösbar miteinander verbindbar, wozu die Gelenkpfanne eine Längsnut besitzt, die die kugelförmigen Gelenkflächen unterbricht und sich vom Äquator der Gelenkpfanne zum offenen Ende hin erstreckt und in die der Gelenkkopf einsteckbar ist, der zwei beabstandete parallele Führungsflächen aufweist, die durch die kugelförmigen Gelenkflächen des Gelenkkopfes miteinander verbunden sind, so dass sich durch eine anschließende Drehbewegung des Gelenkkopfes relativ zu der Gelenkpfanne eine formschlüssige Lagerung des Gelenkkopfes innerhalb der Gelenkpfanne ergibt. Die Führungsflächen sind parallel zueinander ausgerichtet und soweit voneinander beabstandet, dass der Gelenkkopf vollständig in die Längsnut der Gelenkpfanne eingesteckt werden kann. Insofern ist die Breite des Gelenkkopfes und mithin der Abstand der Führungsflächen kleiner als die Breite der Längsnut, die innerhalb der Gelenkpfanne eingearbeitet ist.

Im zusammengesetzten Zustand lässt sich die Halterung in azimutaler Richtung (d. h. entlang des Äquators) über einen Raumwinkel von mindestens 90° bewegen, ohne dass die Längsnut die Befestigung der Halterung innerhalb der Gelenkpfanne beeinträchtigt und/oder einschränkt. In polarer Richtung ist die Bewegungsfreiheit der Halterung aufgrund der vorhandenen Längsnut nicht eingeschränkt. Insofern ist die lösbare Halterung insbesondere für solche Lampen vorteilhaft, die eine stabile und gleichzeitig lösbare Befestigung benötigen und bei denen eine azimutale Verstellung von ca. 90° ausreicht. Insbesondere für Fahrradlampe, die am Lenker eines Fahrrads oder auf einem Helm befestigt werden, hat sich die erfindungsgemäße Halterung als besonders vorteilhaft erwiesen.

Bevorzugte Ausgestaltungen werden nachfolgend sowie in den Unteransprüchen angegeben.

Vorzugsweise ist der Gelenkkopf von einer Schraube zur lösbaren Befestigung einer Lampe durchgriffen. Der Gelenkkopf besitzt zudem mindestens ein Führungselement, das eine relative Verschiebung zwischen der montierten Lampe und dem Gelenkkopf im zusammengesetzten Zustand verhindert.

Nach einer weiterhin bevorzugten Ausgestaltung der Erfindung ist vorgesehen, dass die Gelenkpfanne ein Befestigungselement besitzt, das vorzugsweise mit einem Helm oder einem Fahrradlenker verbindbar ist. Ein solches Befestigungselement kann in Form einer Platte ausgestaltet sein, die mit einer Schnellspanneinrichtung oder mit Kabelbindern an einem Helm oder an einem Fahrradlenker befestigt wird.

Schließlich ist nach einer weiteren bevorzugten Ausgestaltung der Erfindung vorgesehen, dass die Gelenkpfanne aus zwei schalenförmigen Teilbereichen besteht, die von einem Sprengring zusammengehalten sind.

Konkrete Ausgestaltungen der vorliegenden Erfindung werden nachfolgend anhand der Abbildungen erläutert. Es zeigen:
- Fig. 1-4:: unterschiedliche Darstellung einer Halterung,
- Fig. 5 a,b:: eine Haltevorrichtung mit hieran angeordneter Lampe und
- Fig. 6 a-d:: ein Flussdiagramm zur Darstellung der Steck-Dreh-Bewegung zur Verbindung des Gelenkkopfes und der Gelenkpfanne.

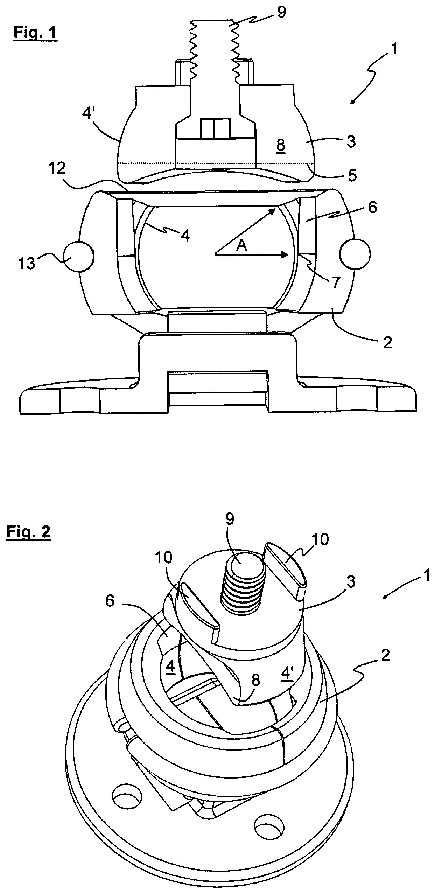

Fig. 1 zeigt eine Querschnittsansicht einer konkreten Ausgestaltung der vorliegenden Erfindung in einer Explosionsdarstellung. Die Halterung 1 weist eine Gelenkpfanne 2 und einen Gelenkkopf 3 auf, die in Teilbereichen korrespondierende Gelenkflächen 4, 4' besitzen. Der Kegelwinkel A zeigt den Bereich der Gelenkpfanne 2, der im zusammengesetzten Zustand den Gelenkkopf 3 über den Äquator 5 des Gelenkkopfes 3 hinaus umfasst, weshalb der Gelenkkopf 3 bei entsprechender Ausrichtung formschlüssig in der Gelenkpfanne 2 gelagert ist. Die Gelenkfläche 4 der Gelenkpfanne 2 ist zur Aufnahme des Gelenkkopfes 3 durch eine Längsnut 6 unterbrochen, die sich vom Äquator 7 der Gelenkpfanne 2 zum offenen Ende 12 hin erstreckt und die es erlaubt, dass der Gelenkkopf 3 und die Gelenkpfanne 2 durch eine Steck-Dreh-Bewegung miteinander verbunden werden können. Der Gelenkkopf 3 besitzt hierzu Führungsflächen 8, die parallel zueinander ausgerichtet sind und die durch die Gelenkflächen 4' des Gelenkkopfes 3 miteinander verbunden sind. Die Gelenkpfanne 2 besteht aus zwei Halbschalen, die durch einen Sprengring 13 zusammengehalten werden.

Fig. 2 zeigt eine perspektivische Ansicht der Halterung 1 ebenfalls in einer Explosionsdarstellung. Deutlich ist die Lage der Längsnut 6 erkennbar, die die kugelförmige Gelenkfläche 4 der Gelenkpfanne 2 durchbricht. Die Breite der Längsnut 6 ist so gewählt, dass der Gelenkkopf 3 mit seinen Führungsflächen 8 in die Gelenkpfanne 2 eingesteckt werden kann, bis der Äquator 5 des Gelenkkopfes 3 und der Äquator 7 der Gelenkpfanne 2 aneinander anliegen. Anschließend lässt sich der Gelenkkopf 3 innerhalb der Gelenkpfanne 2 verdrehen, so dass eine formschlüssige Lagerung entsteht.

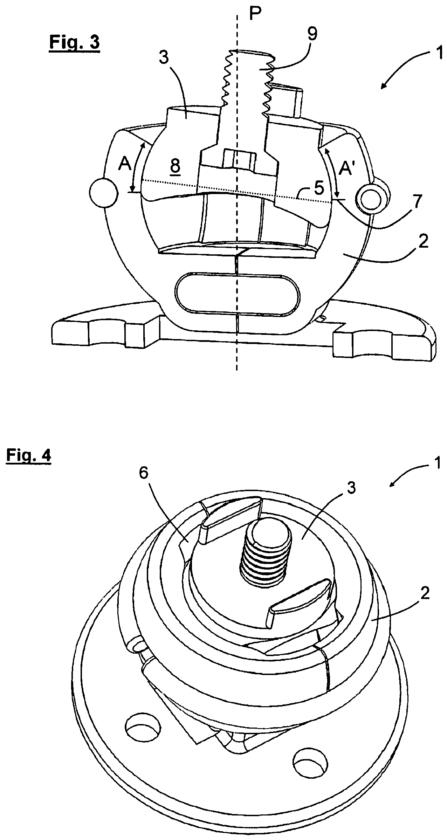

Fig. 3 zeigt die Halterung 1 im zusammengesetzten Zustand und im Verhältnis zu Fig. 1 um 90° um die polare Achse P gedreht, so dass die (nicht dargestellte) Längsnut 6 aus der Blattebene herauskommt. Der Gelenkkopf 3 ist winklig innerhalb der Gelenkpfanne 2 angeordnet und wird hierin formschlüssig gehalten, weil die Gelenkpfanne 2 den Gelenkkopf 3 in den Bereichen A, A' über den Äquator 5 hinaus umgreift.

Fig. 4 zeigt die Einstellung aus Fig. 3 in einer perspektivischen Darstellung.

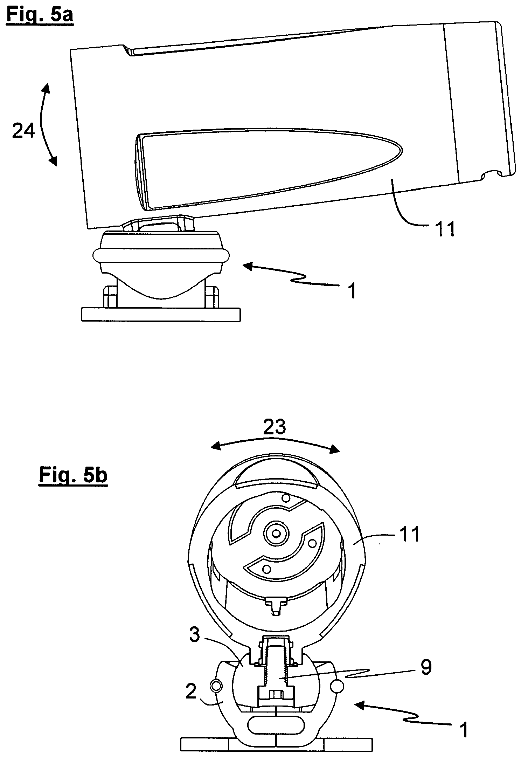

Um eine Lampe mit der erfindungsgemäßen Halterung 1 zu verbinden, wird der Gelenkkopf 3 von einem Befestigungsbolzen 9 durchgriffen. Die Lampe besitzt einen korrespondierenden Gewindeabschnitt und lässt sich hierüber mit dem Gelenkkopf 3 verbinden. Um eine relative Bewegung zwischen der Lampe und dem Gelenkkopf 3 zu verhindern, sind entsprechende Führungselemente 10, 10' (siehe Fig. 2) vorgesehen, die in Ausnehmungen der Lampe eingreifen. Die Fig. 5a,b zeigen eine Haltevorrichtung 1 mit einer daran angeordneten Lampe 11 aus unterschiedlichen Perspektiven. Die Lampe 11 ist in die Pfeilrichtungen 23, 24 verschwenkbar.

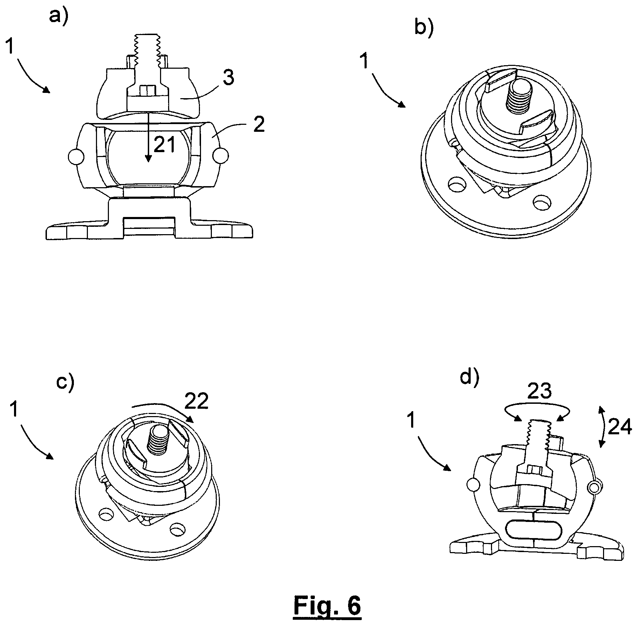

Schließlich zeigt die Bildfolge der Fig. 6a-d die Steck-Dreh-Bewegung dar, mit der die Haltevorrichtung 1 zusammengebaut wird. Ausgehend von Fig. 6a wird hierzu der Gelenkkopf 3 in Pfeilrichtung 21 in die Gelenkpfanne 2 eingesteckt, bis der Gelenkkopf 3 vollständig in der Gelenkpfanne 2 zur Ruhe kommt (Fig. 6b). Anschließend wird der Gelenkkopf 3 innerhalb der Gelenkpfanne 2 in Pfeilrichtung 22 um ca. 90° verdreht (Fig. 6c). In dieser Position lässt sich die Halterung 1 in dem zur Verfügung stehenden Raumwinkel in azimutaler Richtung (Pfeil 23) und/oder polarer Richtung (Pfeil 24) beliebig und stufenlos verstellen.

## Patentansprüche

1. Halterung (1), insbesondere Lampenhalterung, mit einem Kugelgelenk, das eine Gelenkpfanne (2) und einen Gelenkkopf (3) besitzt, die in Teilbereichen korrespondierende kugelförmige Gelenkflächen (4, 4') aufweisen, wobei die Gelenkpfanne (2) im zusammengesetzten Zustand den Gelenkkopf (3) über dessen Äquator (5) hinaus umgreift,
**dadurch gekennzeichnet, dass**
die Gelenkpfanne (2) und der Gelenkkopf (3) durch eine Steck-Dreh-Bewegung lösbar miteinander verbindbar sind, wozu
a) die Gelenkpfanne (2) eine Längsnut (6) besitzt, die die kugelförmigen Gelenkflächen (4) unterbricht und sich vom Äquator (7) der Gelenkpfanne (2) zum offenen Ende (12) hin erstreckt und in die der Gelenkkopf (3) einsteckbar ist, und
b) der Gelenkkopf (3) zwei beabstandete parallele Führungsflächen (8) aufweist, die durch die kugelförmigen Gelenkflächen (4') des Gelenkkopfes (3) miteinander verbunden sind,
so dass sich durch eine anschließende Drehbewegung des Gelenkkopfes (3) relativ zu der Gelenkpfanne (2) eine formschlüssige Lagerung des Gelenkkopfes (3) innerhalb der Gelenkpfanne (2) ergibt.

2. Halterung (1) nach Anspruch 1, **dadurch gekennzeichnet, dass** der Gelenkkopf (3) eine Schraube (9) zur lösbaren Befestigung einer Lampe (11) besitzt.

3. Halterung (1) nach einem der Ansprüche 1 bis 2, **dadurch gekennzeichnet, dass** die Gelenkpfanne (2) ein Befestigungselement besitzt, das vorzugsweise mit einem Helm oder einem Fahrradlenker verbindbar ist.

4. Halterung nach einem der Ansprüche 1 bis 3, **dadurch gekennzeichnet, dass** die Gelenkpfanne (2) aus zwei schalenförmigen Teilbereichen besteht, die von einem Sprengring (13) zusammengehalten werden.

## Claims

1. Holder (1), in particular lamp holder, with a ball joint which has a joint socket (2) and a joint head (3) which in some areas have corresponding spherical joint surfaces (4, 4'), in which in the assembled state the joint socket (2) encompasses the joint head (3) beyond its equator (5), **characterised in that** the joint socket (2) and the joint head (3) are releasable connected to one another by a plug-and-turn movement, for which purpose
a) the joint socket (2) has a longitudinal groove (6) which interrupts the spherical joint surfaces (4) and extends from the equator (7) of the joint socket (2) to the open end (12) and into which the joint head (3) is pluggable, and
b) the joint head (3) has two spaced parallel guide surfaces (8) which are connected to one another by the spherical joint surfaces (4') of the joint head (3),
so that a subsequent rotational movement of the joint head (3) relative to the joint socket (2) results in a form-fitted mounting of the joint head (3) within the joint socket (2).

2. Holder (1) according claim 1, **characterized in that** the joint head (3) has a screw (9) fastening a lamp (11) in a releasable manner.

3. Holder (1) according one of claims 1 to 2, **characterized in that** the joint socket (2) has a fastening element that is preferably connectable to a helmet or a bicycle handlebar.

4. Holder according to one of claims 1 to 3, **characterized in that** the joint socket (2) consists of two saucer-type sections that are held together by a snap ring (13).

## Revendications

1. Support (1), en particulier support de lampe, comprenant un joint sphérique qui comprend une cavité de joint (2) et une tête de joint (3) lesquelles présentent des surfaces de joint (4, 4') sphériques qui correspondent dans des zones partielles, ladite cavité de joint (2) entourant, à l'état assemblé, ladite tête de joint (3) au-delà de son équateur (5), **caractérisé par le fait que** la cavité de joint (2) et la tête de joint (3) peuvent être reliées de manière amovible l'une à l'autre par un mouvement d'engagement et de rotation, à cette fin
a) la cavité de joint (2) présente une rainure longitudinale (6) qui interrompt les surfaces de joint (4) sphériques et s'étend depuis l'équateur (7) de la cavité de joint (2) vers l'extrémité ouverte (12) et dans laquelle la tête de joint (3) peut être engagée, et
b) la tête de joint (3) présente deux surfaces de guidage (8) parallèles espacées qui sont reliées l'une à l'autre par les surfaces de joint (4') sphériques de la tête de joint (3) de sorte qu'un mouvement de rotation ayant lieu ensuite de la tête de joint (3) par rapport à la cavité de joint (2) conduit à ce que la tête de joint (3) soit logée à engagement positif à l'intérieur de la cavité de joint (2).

2. Support (1) selon la revendication 1, **caractérisé par le fait que** la tête de joint (3) présente une vis (9) destinée à fixer de manière amovible une lampe (11).

3. Support (1) selon l'une quelconque des revendications 1 à 2, **caractérisé par le fait que** la cavité de joint (2) présente un élément de fixation qui, de préférence, peut être relié à un casque ou à un guidon de vélo.

4. Support selon l'une quelconque des revendications 1 à 3, **caractérisé par le fait que** la cavité de joint (2) se compose de deux zones partielles en forme de coque qui sont maintenues ensemble par un anneau d'arrêt (13).
